# EUROPÄISCHE PATENTSCHRIFT

(11) **EP 2 655 808 B1**
(45) Veröffentlichungstag und Bekanntmachung des Hinweises auf die Patenterteilung: **02.08.2017**
(21) Anmeldenummer: 12700157.6
(22) Anmeldetag: 05.01.2012
(51) Int. Cl.: F01D 25/28, B25B 27/06

(54) **VERFAHREN ZUM ABZIEHEN EINES LAGERKÖRPERS VOM ROTOR EINER GASTURBINE SOWIE ROHRFÖRMIGE WELLENVERLÄNGERUNG**
METHOD FOR PULLING A BEARING BODY OFF THE ROTOR OF A GAS TURBINE AND TUBULAR SHAFT EXTENSION
PROCÉDÉ POUR RETIRER UN CORPS DE PALIER DU ROTOR D'UNE TURBINE À GAZ ET PROLONGEMENT D'ARBRE TUBULAIRE

(30) Priorität: 09.02.2011 DE 102011010790
(43) Veröffentlichungstag der Anmeldung: 30.10.2013
(73) Patentinhaber: Siemens Aktiengesellschaft, 80333 München (DE)
(72) Erfinder: MÜLLER, Dirk, 45470 Mülheim a.d.Ruhr (DE)
(86) Internationale Anmeldenummer: PCT/EP2012/050125
(87) Internationale Veröffentlichungsnummer: WO 2012/107248

(56) Entgegenhaltungen:
- EP-A1- 0 834 645
- DE-A1- 19 643 336
- US-A- 3 124 870
- US-A- 3 403 434
- US-A- 3 467 811
- US-A- 4 451 979
- US-A- 4 635 336
- US-A- 5 251 368

## Beschreibung

Die Erfindung betrifft ein Verfahren zum Abziehen eines Lagerkörpers vom Rotor einer vorzugsweise stationären Gasturbine mit einem vorzugsweise hälftig teilbaren Gehäuse bei geschlossenem Gehäuse. Weiter betrifft die Erfindung eine rohrförmige Wellenverlängerung zum Parken eines Lagerkörpers eines Rotors einer vorzugsweise stationären Gasturbine mit einem vorzugsweise hälftig teilbaren Gehäuse.

Stationäre Gasturbinen sind aus dem umfangreich vorhandenen Stand der Technik längstens bekannt. Deren Rotoren werden üblicherweise sowohl an einem verdichterseitigen Ende als auch an einem turbinenseitigen Ende radial gelagert. Das turbinenseitige Radiallager von Gasturbinen befindet sich innerhalb der Abgasstrecke der Gasturbine, zumeist unmittelbar hinter der letzten Laufschaufelreihe der Turbineneinheit. Zur Lagerung sind in der Abgasstrecke meist in geringer Anzahl, d.h. vier, fünf oder sechs, sich radial erstreckende Lagerstreben vorgesehen, in deren Zentrum ein Lagergehäuse für den Lagerkörper des turbinenseitigen Radiallagers angesiedelt ist.

Defekte am Lagerkörper oder an den Lagerschalen können dazu führen, dass diese Bauteile ausgetauscht werden müssen. Bei stationären Gasturbinen, die üblicherweise mit einem in einer Teilungsebene hälftig teilbaren Gehäuse ausgestattet sind, ist im Reparaturfall die obere Gehäusehälfte der stationären Gasturbine von der unteren Gehäusehälfte zuerst zu lösen und dann abzuheben. Anschließend ist der unteren Gehäusehälfte der Rotor inklusive des Lagers zu entnehmen, wonach erst das Lager vom Rotor abgezogen werden kann.

Diese Vorgehensweise ist jedoch besonders zeitaufwändig, da nach dem Abkühlen der Gasturbine eine längere Rüstzeit zum Lösen der Gehäuseverschraubungen, zum Aufdecken der Gasturbine und zum Entnehmen des Rotors erforderlich ist. Nach der Reparatur des defekten Bauteils muss der Rotor wieder in die untere Gehäusehälfte eingelegt und ausgerichtet werden. Anschließend wird die obere Gehäusehälfte montiert. Sonach sind die Gehäusehälften miteinander über die bekannten Verschraubungen miteinander zu befestigen, was ebenfalls die Stillstandzeit der stationären Gasturbine enorm verlängert.

Um einen Lagerkörper zu demontieren werden einige Lösungen in dem Stand der Technik vorgeschlagen. So beschreibt etwa die DE 196 43 336 A1 ein Verfahren zum Demontieren eines stirnseitigen Lagergehäuses eines Flugtriebwerkes. Hierbei wird am Lagergehäuse ein Druckkraftwerkzeug angesetzt, welches insbesondere hydraulisch betätigt werden kann, und welches derart ausgebildet ist, dass mit Hilfe dieses Druckkraftwerkzeuges das Lagergehäuse von der Turbinenwelle abgezogen werden kann.

Die Druckschrift US 4 635 336 beschreibt zudem eine Vorrichtung zum Entfernen von Rotorscheiben, welche auf einem Gasturbinenläufer einer Gasturbine montiert sind. Zur Kraftbeaufschlagung der Rotorscheiben in eine Richtung entlang der Längsachse des Gasturbinenläufers wird ein Zieher eingesetzt, mittels welchem eine einzelne Rotorscheibe aus dem Verbund gelöst werden kann.

Weiterhin beschreibt die Druckschrift US 3 124 870 Mittel zum Entfernen eines Lagers von einer drehbaren Welle. Um das Lager zu entfernen, wird eine auf die Welle aufgeschraubte Hülse axial mit einer Kraft derart beaufschlagt, dass die Hülse auf ein daran unmittelbar angeordnetes Lager drückt und dieses aus seinem Sitz auf der Welle löst.

Nachteilig an diesen aus dem Stand der Technik bekannten Lösungen ist jedoch, dass diese kein ausreichend sicheres Arbeiten auch an sehr schweren und großen Lagerkörpern erlauben.

Aus diesen Gründen besteht das Bedürfnis, die Stillstandzeit der Gasturbine zu verkürzen, wobei ein sicheres Arbeiten im Reparaturfall gewährleistet werden soll.

Aufgabe der Erfindung ist daher die Bereitstellung eines Verfahrens, welches die vorgenannten Nachteile überwindet. Weitere Aufgabe der Erfindung ist die Bereitstellung eines das Verfahren unterstützenden Werkzeugs.

Die auf das Verfahren gerichtete Aufgabe wird gelöst mit den Schritten:
- Befestigen einer Wellenverlängerung am betreffenden Ende des Rotors ,
   a) Abstützen des Rotors oder/und
   b) Halten des Rotors zur Befreiung des Lagerkörpers von der Gewichtskraft des Rotors,
- Anbringen von Gleitelementen zwischen Lagerkörper und Rotor und
- axiales Bewegen des Lagerkörpers entlang der Maschinenachse auf die Wellenverlängerung, wobei der Lagerkörper mit Hilfe einer Verdrehsicherung gegen Drehen während und nach der Axialverschiebung gesichert wird.

Die auf das Werkzeug gerichtete Aufgabe wird gelöst durch eine rohrförmige Wellenverlängerung zum Lösen eines Lagerkörpers eines Rotors einer vorzugsweise stationären Gasturbine, wobei die Wellenverlängerung an einem Ende ein Innengewinde zum Aufschrauben der Wellenverlängerung auf ein Ende des Rotors der Gasturbine umfasst und zumindest eine an der Außenseite der Wellenverlängerung angeordnete Führung zur Bildung eines von zwei Partnern einer Verdrehsicherung für den entlang der Wellenverlängerung verschiebbaren Lagerkörper vorgesehen ist.

Weitere vorteilhafte Ausgestaltungen und Merkmale sind in den Unteransprüchen angegeben.

Erfindungsgemäß ist vorgesehen, dass am betreffenden Ende des Rotors eine Wellenverlängerung befestigt wird. Anschließend wird das betreffende Radiallager von der Gewichtskraft des Rotors befreit, indem der Rotor nach unten abgestützt und/oder von oben gehalten wird. Durch die Befreiung des Radiallagers von den radial wirkenden Gewichtskräften des Rotors ist dieses erstmals mit Radialspiel mittelbar an den Radialstreben befestigt. Anschließend werden die nur für die Demontage und Montage vorgesehenen Gleitelemente zwischen Lagerkörper und Rotor angebracht. Sonach kann der Lagerkörper auf die Wellenverlängerung verschoben und für die daran durchzuführenden Reparaturarbeiten dort geparkt werden. In der Parkposition wird der Lagerkörper gegen jede weitere Bewegung gesichert. Dabei ist er von allen Seiten frei zugänglich. Die freie Zugänglichkeit des Lagerkörpers ermöglicht dann dessen Reparatur innerhalb des Abgasgehäuses der Gasturbine, ohne dass die Gasturbine hierzu aufgedeckt werden muss. Das Abdecken der oberen Gehäusehälfte der stationären Gasturbine und die Entnahme des Rotors entfallen ersatzlos. Dies reduziert signifikant die Rüstzeit zur Reparatur des betreffenden Lagers und vergrößert somit in gleichem Maße die Verfügbarkeit der Gasturbine.

Erfindungsgemäß ist fernerhin der Lagerkörper mit einer Verdrehsicherung gegen Drehen bzw. Schwenken während und nach der Axialverschiebung gesichert. Diese Maßnahme erhöht die Arbeitssicherheit der die Verschiebung und Reparatur durchführenden Monteure, da keine unkontrollierte Bewegung des Lagerkörpers während der Axialverschiebung und danach in der Parkposition auftreten kann.

Gemäß einer Ausgestaltung des Verfahrens ist der Lagerkörper in Umfangsrichtung ungeteilt ausgestaltet. Die einstückige Ausführung des Lagerkörpers ermöglicht besonders einfach das Verschieben des Lagerkörpers entlang der Wellenverlängerung. Auch bei der nach der Reparatur durchzuführenden Montage des Lagerkörpers ist eine Justierung etwaiger Lagerkörperhälften gegenüber dem Rotor nicht erforderlich. Mithin ermöglicht auch diese Maßnahme eine besonders schnelle Demontage und Montage des Lagerkörpers.

Vorzugsweise ist als Verdrehsicherung an der Wellenverlängerung zumindest eine sich in Axialrichtung erstreckende Führung vorgesehen, welche die tangentiale Bewegung eines am Lagerkörper starr befestigten Stifts bei einer drohenden Drehbewegung des Lagerkörpers begrenzt. Der Vorteil dieser Ausgestaltung einer Verdrehsicherung liegt in deren einfachen und kostengünstigen Herstellbarkeit. Beispielsweise ist die Führung als U-Profil ausgestaltet, an dessen nach außen weisenden Steg der Stift unter besonders geringem Spalt entlang gleiten kann. Somit begrenzen die beiden Kanten des U-Profils, die auf einem größeren Radius liegen als die Stegmitte, die Bewegung des Stifts in Umfangsrichtung, wodurch bei drohender Tangentialbewegung des Lagerkörpers diese sicher verhindert wird. Anstelle des U-Profils kann selbstverständlich auch ein außen, senkrecht zum Radius der Wellenverlängerung angebrachtes Flachprofil in analoger Weise verwendet werden. Dies ist flachbauender und ermöglicht die Anwendung des Verfahrens auch bei Lagerkörpern mit vergleichsweise kleinem Innendurchmesser.

Zweckmäßigerweise wird die Wellenverlängerung am betreffenden Ende des Rotors wieder lösbar befestigt. Dazu ist vorgesehen, dass die Wellenverlängerung auf das Rotorende aufgeschraubt wird. Diese Ausgestaltung ist insbesondere für derartige Rotoren von Vorteil, die ohnehin mit einem zentralen Zuganker ausgestaltet sind und dessen Ende ohnehin mit einem Gewinde ausgestattet ist. Eine Anpassung derartiger Rotoren zur Durchführung des erfindungsgemäßen Verfahrens ist nicht erforderlich.

Die Wellenverlängerung kann vor dem Aufschrauben auf den Rotor besonders einfach ausgerichtet werden, wenn die Wellenverlängerung auf einem Rollenbock aufliegt, der seinerseits radial und tangential beweglich gelagert ist. Demnach wird der Rollenbock so positioniert, dass die Wellenverlängerung versatzfrei auf den Rotor aufgeschraubt werden kann. Nach Abschluss der Positionierung kann die Wellenverlängerung, die als Rohr ausgebildet ist, auf dem Rollenbock gedreht und dabei gleichzeitig auf den Rotor aufgeschraubt werden. Hierdurch werden Beschädigungen an den an der Verschraubung beteiligten Gewinde sicher vermieden.

Bevorzugt ist der Lagerkörper an zwei axialen Positionen mittels der Gleitelemente am Rotor und/oder dessen Verlängerung abgestützt. Dies verhindert ein Verkippen des Lagerkörpers gegenüber dem Rotor bzw. der Rotorverlängerung, so dass sich dieser stets konzentrisch und koaxial zur Maschinenachse befindet.

Erfindungsgemäß weist die rohrförmige Verlängerung zum Parken eines Lagerkörpers eines Rotors einer vorzugsweise stationären Gasturbine mit einem vorzugsweise hälftig teilbaren Gehäuse an einem Ende ein Innengewinde zum Aufschrauben der Wellenverlängerung auf ein Ende des Rotors der Gasturbine und zumindest eine an der Außenseite der Wellenverlängerung angeordnete Führung zur Bildung eines von zwei Partnern einer Verdrehsicherung für den entlang der Wellenverlängerung verschiebbaren Lagerkörper auf.

Die die Wellenverlängerung betreffenden Vorteile entsprechen dabei den Verfahrensvorteilen.

Weitere Vorteile, Merkmale und Eigenschaften der Erfindung werden anhand von eines bevorzugten Ausführungsbeispiels in den folgenden Zeichnungen näher erläutert. Es zeigen:
- FIG 1: einen Längsteilschnitt durch das turbinenseitige Ende einer stationären Gasturbine,
- FIG 2: den Längsteilschnitt nach FIG 1 mit zwischen Lagerkörper und Rotor angeordneten Gleitelementen,
- FIG 3: den Längsschnitt nach FIG 1 mit einem auf eine Wellenverlängerung verschobenen Lagerkörper,
- FIG 4: einen Abgaskanal einer Gasturbine in perspektivischer teilgeschnittener Darstellung mit einer auf ein Rotorende aufgeschraubten Wellenverlängerung und dem darauf verschobenen Lagerkörper,
- FIG 5: einen Querschnitt durch die Wellenverlängerung,
- FIG 6: eine Seitenansicht der Wellenverlängerung und
- FIG 7: einen am Lagerkörper befestigbaren Stift mit einer stirnseitig angeordneten Schraube zur Einstellung eines Spaltmaßes.

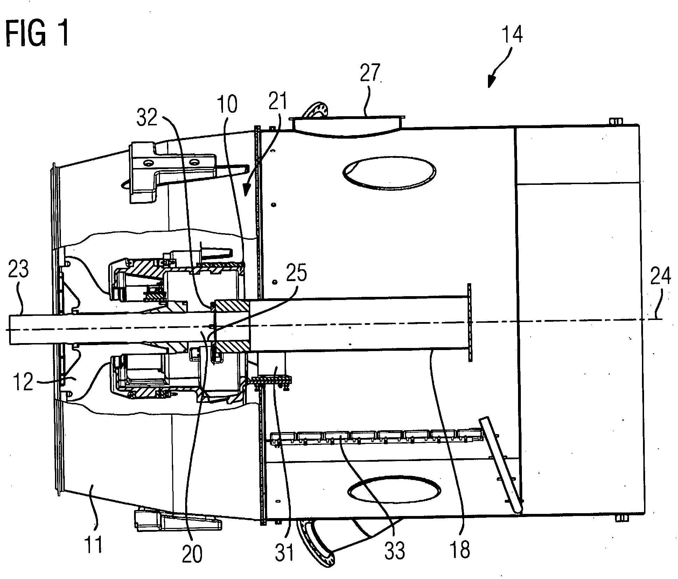

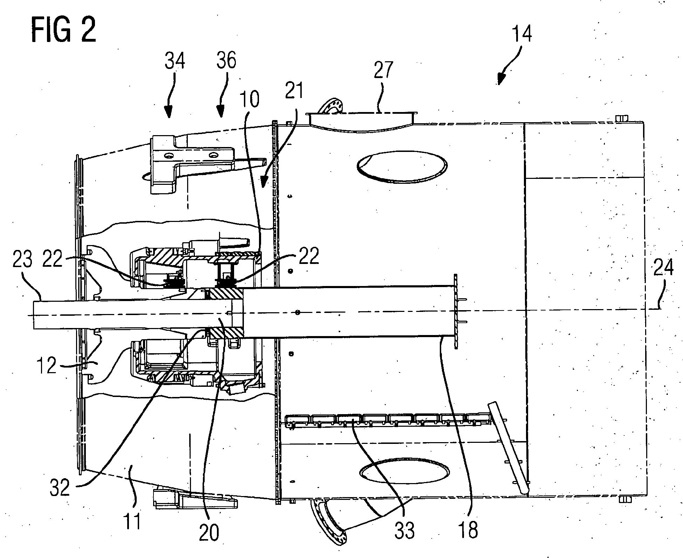

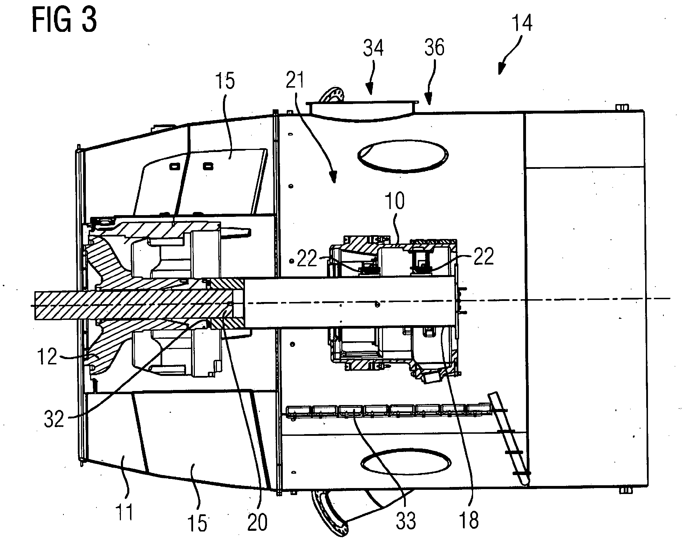

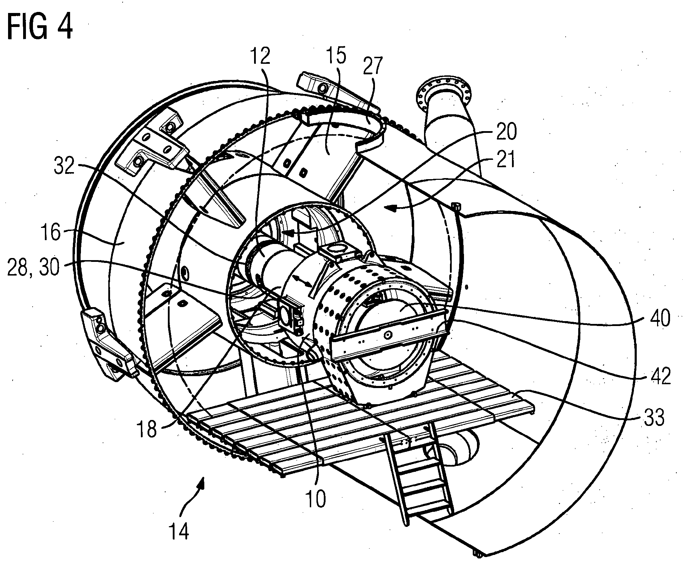

Die FIG 1 zeigt als Längsteilschnitt ein Turbinenabgasgehäuse 11 einer stationären Gasturbine 14. Die Gasturbine 14 weist stromauf des Turbinenabgasgehäuses 11 ein hälftig teilbares Gehäuse mit einer unteren Gehäusehälfte und einer oberen Gehäusehälfte auf (nicht dargestellt), die in bekannter Art und Weise flanschartig miteinander verbunden und durch entsprechende Verschraubungen miteinander verschraubt sind. Das Turbinenabgasgehäuse 11 der Gasturbine 14 ist ungeteilt ausgestaltet und begrenzt einen Abgaskanal 21. Darin sind fünf sich in Radialrichtung erstreckende Lagerstreben 15 (FIG 3, 4) entlang des Umfangs gleichmäßig verteilt, die radial innen ein Lagergehäuse gemeinschaftlich tragen und halten. Im Lagergehäuse ist ein Lagerkörper 10 zur radialen. Lagerung eines Rotors 12 der Gasturbine 14 vorgesehen. In der in FIG 1 gezeigten Ausgestaltung der Gasturbine 14 ist der Rotor 12 in Scheibenbauweise mit einem durch die Scheiben sich zentral erstreckenden Zuganker 23 ausgebildet. Der Zuganker 23 ist auch turbinenendseitig mit einem Gewinde 25 versehen, auf den eine Wellenverlängerung 18 aufschraubbar ist. Die Wellenverlängerung 18 wird mit Hilfe eines nicht weiter dargestellten Krans durch einen Zugang 27 für Monteure in den Abgaskanal 21 der Gasturbine 14 eingebracht und anschließend auf einen Rollenbock 31 abgelegt. Mit Hilfe des Rollenbocks 31, welcher ein Paar Rollen umfasst, kann die Wellenverlängerung 18 gegenüber dem Zugankerende 20 des Rotors 12 so positioniert werden, dass dieser versatzfrei auf das Ende Zugankerende 20 aufgeschraubt werden kann. Gemäß FIG 1 ist die Wellenverlängerung 18 noch nicht auf das Zugankerende 20 aufgeschraubt. Nach dem Aufschrauben der Wellenverlängerung 18 (FIG 2) wird diese mit Hilfe einer Kontermutter 32 gegen Lösen gesichert.

Anschließend wird der Rotor 12 turbinenendseitig über nicht weiter dargestellte Elemente unmittelbar am Turbinenabgasgehäuse 11 der Gasturbine 14 abgestützt, so dass der Lagerkörper 10 von der Gewichtskraft des Rotors 12 befreit ist. Dafür eignen sich insbesondere handelsübliche Spannelemente der Marke "Superbolt". Gleichzeitig oder auch danach werden dann Gleitelemente 22 oder auch Gleitschuhe zwischen dem Lagerkörper 10 und dem Rotor 12 bzw. der Wellenverlängerung 18 angebracht, so dass mit Hilfe dieser Gleitelemente 22 der Lagerkörper 10 entlang der Maschinenachse 24 verschoben werden kann.

Es sei angemerkt, dass die im Lagerkörper 10 üblicherweise vorgesehenen Lagerschalen in keiner der hier gezeigten Figuren dargestellt sind und bereits noch vor dem Befestigen der Wellenverlängerung 18 am betreffenden Zugankerende 20 aus dem Lagerkörper 10 entfernt werden können.

Anschließend kann der Lagerkörper 10 durch axiales Bewegen - also Verschieben - entlang der Maschinenachse 24 auf die Wellenverlängerung geschoben und dort geparkt werden (FIG 3,4). Nach der Verschiebung auf die Wellenverlängerung 18 wird der Lagerkörper 10 zeitweilig für die Dauer der geplanten Arbeiten gesichert. Sonach sind Reparaturarbeiten eines Monteurs im Inneren des Lagergehäuses oder am Lagerkörper 10 möglich, ohne dass die Gasturbine 14 geöffnet und deren Rotor 12 entnommen werden muss. Um die Arbeiten am Lagerkörper 10 zu erleichtern, kann im Inneren des Abgaskanals 21 zwischenzeitlich eine Arbeitsebene 33 oder Arbeitsbühne montiert werden, auf der ein Monteur die Reparaturarbeiten durchführen kann.

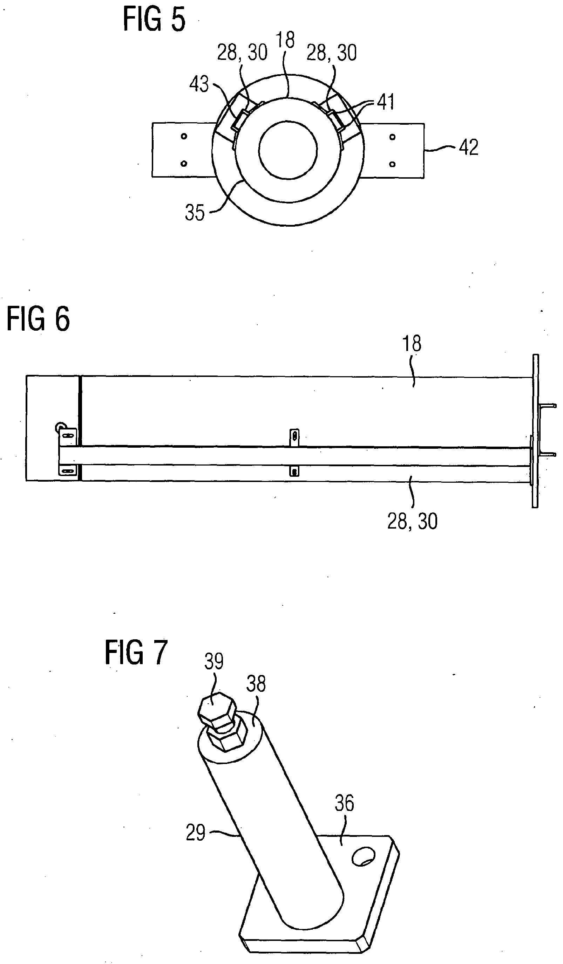

Die rohrförmige Wellenverlängerung 18 ist in FIG 5 in einem Querschnitt und in FIG 6 in einer Seitenansicht gezeigt. Prinzipiell ist die Verlängerung 18 als Rohr mit einem endseitig angeordneten Innengewinde ausgestattet. Zusätzlich weist die Wellenverlängerung 18 an ihrer Außenseite 35 zwei in Längsrichtung erstreckende Führungen 28 auf. Gemäß FIG 5 ist die Führung 28 als ein U-Profil ausgestaltet, welches an der Wellenverlängerung 18 außenseitig befestigt ist. Das U-Profil ist dabei so an der Wellenverlängerung 18 befestigt, dass dessen Flanken an der Außenfläche anliegen und der sich zwischen den Flanken erstreckende Steg 30 nach außen weist. Das U-Profil ist einer von zwei Partnern einer Verdrehsicherung. Gemäß der in Figuren 5, 6 dargestellten Ausführungsform der Wellenverlängerung 18 sind an der Außenfläche der Wellenverlängerung 18 zwei derartige Führungen 28 vorgesehen. Sie befinden sich bei ausgerichteter Wellenverlängerung 18 symmetrisch beidseitig einer 12:00 Uhr Position.

Der zur Bildung der Verdrehsicherung 26 erforderliche zweite Partner ist in FIG 6 perspektivisch dargestellt. Der zweite Partner umfasst lediglich einen am Lagerkörper 10 befestigbaren Stift 29, dessen - in Montageposition - nach innen ragendes freie Ende 38 stirnseitig mit einer Schraube 39 zur Einstellung des Spaltmaßes zum Steg 30 der Führung 28 versehen ist.

Beim Durchführen des erfindungsgemäßen Verfahrens wird die am Stiftende 29 angebrachte Schraube 39 so weit aus dem Stift 29 herausgedreht, bis diese mit besonders kleinem Spalt einer Stegmitte 43 des U-Profils gegenüberliegt. Die Kanten 41 zwischen Flanke und Steg 30 des U-Profils liegen auf einem größeren Radius als die Stegmitte 43 zwischen den beiden Kanten 41. Bei einer drohenden tangentialen - also in Umfangsrichtung gerichteten - Bewegung des Lagerkörpers 10 wird diese blockiert, da aufgrund des vergleichsweise kleinen Spalts zwischen Stegmitte 43 und der Schraube 39 letztere an die Kante 41 anstößt. Dadurch kann eine die Monteure gefährdende Drehbewegung des Lagerkörpers 10 während und nach dem Verschieben auf die Wellenverlängerung 18 sicher vermieden werden. Zudem weist die Wellenverlängerung 18 an ihrem freien Ende 40 einen Anschlag 42 in Form einer Platte auf, welche als Begrenzung des axialen Verschiebewegs des Lagerkörpers 10 dient. Damit wird sicher vermieden, dass der Lagerkörper 10 von der Wellenverlängerung 18 heruntergeschoben werden kann.

Anstelle des U-Profils ist auch ein Flachprofil als Anlagefläche bzw. Führung geeignet. Dieses ist dann so an der Wellenverlängerung 18 befestigt, dass dessen Flachseite senkrecht zum Radius der Wellenverlängerung und parallel zur Maschinenachse 24 ausgerichtet ist. Damit wird die gleiche Wirkung erzielt wie mit U-Profil.

Insgesamt betrifft die Erfindung ein Verfahren zum Abziehen eines Lagerkörpers 10 vom Rotor 12 einer vorzugsweise stationären Gasturbine 14 mit einem vorzugsweise hälftig teilbaren Gehäuse bei geschlossenem Gehäuse. Um die Montage- und Demontagezeit bei der Reparatur eines Lagerkörpers 10 einer entsprechenden Gasturbine 14 zu verringern, ist erfindungsgemäß vorgesehen, dass eine Wellenverlängerung 18 am betreffenden Ende 20 des Rotors 12 befestigt und der Rotor 12 zur Befreiung des Lagerkörpers 10 von der Gewichtskraft des Rotors 12 gleichzeitig abgestützt und/oder gehalten wird. Anschließend werden Gleitelemente 22 zwischen Lagerkörper 10 und Rotor 12 angebracht, wonach der Lagerkörper 10 entlang der Maschinenachse 24 auf die Wellenverlängerung 18 geschoben und dort geparkt werden kann.

## Patentansprüche

1. Verfahren zum Abziehen eines Lagerkörpers (10) vom Rotor (12) einer vorzugsweise stationären Gasturbine (14) mit einem vorzugsweise hälftig teilbaren Gehäuse bei geschlossenem Gehäuse,
mit den Schritten:
- Befestigen einer Wellenverlängerung (18) am betreffenden Ende (20) des Rotors (12) und
a) Abstützen des Rotors (12) oder/und
b) Halten des Rotors (12)
zur Befreiung des Lagerkörpers (10) von der Gewichtskraft des Rotors (12),
- Anbringen von Gleitelementen (22) zwischen Lagerkörper (10) und Rotor (12)
- axiales Bewegen des Lagerkörpers (10) entlang der Maschinenachse (24) auf die Wellenverlängerung (18), **dadurch gekennzeichnet**, das
der Lagerkörper (10) mit Hilfe einer Verdrehsicherüng (26) gegen Drehen während und nach der Axialverschiebung gesichert wird.

2. Verfahren nach Anspruch 1,
bei dem zur Verdrehsicherung (26) an der Wellenverlängerung (18) zumindest eine sich in Axialrichtung erstreckende Führung (28) vorgesehen ist, welche die tangentiale Bewegung eines am Lagerkörper (10) befestigten Stifts (29) bei einer drohenden Drehbewegung des Lagerkörpers (10) begrenzt.

3. Verfahren nach Anspruch 2,
bei dem die Führung (28) als U-Profil ausgestaltet ist, an dessen nach außen weisenden Steg (30) der Stift (29) unter geringem Spalt entlang gleiten kann oder
bei dem die Führung (28) als Flachprofil ausgestaltet ist, dessen Flachseite sich senkrecht zum Radius der Wellenverlängerung (18) und parallel zur Maschinenachse (24) erstreckt.

4. Verfahren nach einem der Ansprüche 1 bis 3,
bei dem die Wellenverlängerung (18) auf das Ende (20) des Rotors (12) aufgeschraubt wird.

5. Verfahren nach Anspruch 4,
bei dem die Wellenverlängerung (18) zum versatzfreien Aufschrauben auf den Rotor (12) mit Hilfe eines Rollenbocks (31) gegenüber dem Rotor (12) ausgerichtet wird.

6. Verfahren nach Anspruch 4 oder 5,
bei dem die auf den Rotor (12) aufgeschraubte Wellenverlängerung (18) mit Hilfe einer Kontermutter (32) positioniert und gegen Verdrehen gesichert wird.

7. Verfahren nach einem der Ansprüche 1 bis 6,
bei dem der Lagerkörper (10) an zwei axialen Positionen (34, 36) mittels der Gleitelemente (22) am Rotor (12) bzw. dessen Verlängerung (18) abgestützt ist.

8. Rohrförmige Wellenverlängerung (18) zum Lösen eines Lagerkörpers (10) eines Rotors (12) einer vorzugsweise stationären Gasturbine (14), **dadurch gekennzeichnet**, dassdie Wellenverlängerung (18) an einem Ende ein Innengewinde zum Aufschrauben der Wellenverlängerung (18) auf ein Ende (20) des Rotors (12) der Gasturbine (14) umfasst und
zumindest eine an der Außenseite (35) der Wellenverlängerung (18) angeordnete Führung (28) zur Bildung eines von zwei Partnern einer Verdrehsicherung (26) für den entlang der Wellenverlängerung (18) verschiebbaren Lagerkörper (10) vorgesehen ist.

9. Wellenverlängerung (18) nach Anspruch 8,
bei dem die Führung (28) als sich entlang der Wellenverlängerung (18) erstreckendes U-Profil ausgestaltet ist, dessen Steg (30) nach außen weist.

## Claims

1. Method for pulling a bearing body (10) off the rotor (12) of a preferably stationary gas turbine (14) having a casing which can preferably be divided into halves, while the casing is closed,
comprising the following steps:
- fixing a shaft extension (18) on the relevant end (20) of the rotor (12) and
a)supporting the rotor (12) and/or
b)holding the rotor (12)
in order to free the bearing body (10) of the weight of the rotor (12),
- fitting sliding elements (22) between the bearing body (10) and the rotor (12)
- moving the bearing body (10) axially along the machine axis (24) onto the shaft extension (18),
**characterized in that**
the bearing body (10) is secured against rotation during and after axial movement with the aid of an anti-rotation device (26).

2. Method according to Claim 1,
in which at least one guide (28) extending in the axial direction is provided as an anti-rotation device (26) on the shaft extension (18), said guide limiting the tangential movement of a pin (29) fixed on the bearing body (10) when there is a risk of rotary motion of the bearing body (10).

3. Method according to Claim 2,
in which the guide (28) is embodied as a U-profile, along the outward-facing web (30) of which the pin (29) can slide with a small clearance or
in which the guide (28) is embodied as a flat profile, the flat side of which extends perpendicularly to the radius of the shaft extension (18) and parallel to the machine axis (24).

4. Method according to one of Claims 1 to 3,
in which the shaft extension (18) is screwed onto the end (20) of the rotor (12).

5. Method according to Claim 4,
in which the shaft extension (18) is aligned relative to the rotor (12) with the aid of a roller bracket (31) to enable it to be screwed onto the rotor (12) without misalignment.

6. Method according to Claim 4 or 5,
in which the shaft extension (18) screwed onto the rotor (12) is positioned and secured against rotation with the aid of a locknut (32).

7. Method according to one of Claims 1 to 6,
in which the bearing body (10) is supported on the rotor (12) or the extension (18) thereof at two axial positions (34, 36) by means of the sliding elements (22).

8. Tubular shaft extension (18) for releasing a bearing body (10) of a rotor (12) of a preferably stationary gas turbine (14),
**characterized in that**
the shaft extension (18) comprises an internal thread at one end for screwing the shaft extension (18) onto one end (20) of the rotor (12) of the gas turbine (14) and
at least one guide (28), arranged on the outside (35) of the shaft extension (18), is provided for forming one of two mating parts of an anti-rotation device (26) for the bearing body (10), which can be moved along the shaft extension (18).

9. Shaft extension (18) according to Claim 8,
in which the guide (28) is embodied as a U-profile which extends along the shaft extension (18) and the web (30) of which faces outward.

## Revendications

1. Procédé pour retirer un corps (10) de palier du rotor (12) d'une turbine (14) à gaz, de préférence fixe, ayant une carcasse pouvant être séparée, de préférence par moitié, alors que la carcasse est fermée,
comprenant les stades :
- fixation d'un prolongement (18) d'arbre à l'extrémité (20) concernée du rotor (10) et
a) appui du rotor (10) ou/et
b) maintien du rotor (12)
pour libérer le corps (10) de palier de la force pondérale du rotor (12),
- mise d'éléments (22) de glissement entre le corps (10) de palier et le rotor (12)
- déplacement axial du corps (10) de palier le long de l'axe (24) de la machine sur le prolongement (18) d'arbre,
**caractérisé en ce que**
on empêche, à l'aide d'un dispositif (26) anti torsion, le corps (10) de palier de tourner pendant et après le déplacement axial.

2. Procédé suivant la revendication 1,
dans lequel il est prévu, comme dispositif (26) anti torsion, sur le prolongement (18) d'arbre, au moins un guidage (28), qui s'étend dans la direction axiale et qui limite, lorsque le corps (10) de palier menace de tourner, le déplacement tangentiel d'une broche (29) fixée au corps (10) de palier.

3. Procédé suivant la revendication 2,
dans lequel le guidage (28) est conformé en profilé en U, sur l'âme (30) duquel, tournée vers l'extérieur, la broche (29) peut glisser avec un petit intervalle ou dans lequel le guidage est conformé en profilé plat, dont le côté plat s'étend perpendiculairement au rayon du prolongement (18) de l'arbre et parallèlement à l'axe (24) de la machine.

4. Procédé suivant l'une des revendications 1 à 3,
dans lequel le prolongement (18) d'arbre est vissé à l'extrémité (20) du rotor (12).

5. Procédé suivant la revendication 4,
dans lequel le prolongement (18) d'arbre est, pour le vissage sans décalage sur le rotor (12), orienté par rapport au rotor (12) à l'aide d'un support (31) à rouleau.

6. Procédé suivant la revendication 4 ou 5,
dans lequel le prolongement (18) d'arbre vissé sur le rotor (12) est mis en position et protégé de la torsine à l'aide d'un contre-écrou (32).

7. Procédé suivant l'une des revendications 1 à 6,
dans lequel le corps (10) de palier s'appuie, en deux positions (34, 36) axiales, sur le rotor (12) ou son prolongement (18), au moyen des éléments (22) de glissement.

8. Prolongement (18) d'arbre tubulaire pour retirer un corps (10) de palier d'un rotor (10) d'une turbine (14) à gaz, de préférence fixe, **caractérisé en ce que** le prolongement (18) d'arbre comprend, à une extrémité, un taraudage de vissage du prolongement (18) d'arbre sur une extrémité (20) du rotor (12) de la turbine (14) à gaz et
il est prévu au moins un guidage (28), disposé du côté (35) extérieur du prolongement (18) d'arbre, pour former l'un de deux partenaires d'un dispositif (26) anti torsion, pour le corps (10) de palier pouvant se déplacer le long du prolongement (10) d'arbre.

9. Prolongement (18) d'arbre suivant la revendication 8,
dans lequel le guidage (28) est conformé en profilé en U, qui s'étend le long du prolongement (18) d'arbre et dont l'âme (30) est tournée vers l'extérieur.
